**Europäisches Patentamt**

**European Patent Office**

**Office européen des brevets**

(19)

(11) Veröffentlichungsnummer: **0 101 605**
**B1**

(12) # EUROPÄISCHE PATENTSCHRIFT

(45) Veröffentlichungstag der Patentschrift:
**17.11.88**

(51) Int. Cl.⁴: **H 04 B 3/23**

(21) Anmeldenummer: **83108083.3**

(22) Anmeldetag: **16.08.83**

(54) Schaltungsanordnung zur Basisbandübertragung mit Echokompensation.

(30) Priorität: **20.08.82 DE 3231055**

(43) Veröffentlichungstag der Anmeldung:
**29.02.84 Patentblatt 84/9**

(45) Bekanntmachung des Hinweises auf die Patenterteilung:
**17.11.88 Patentblatt 88/46**

(84) Benannte Vertragsstaaten:
**AT CH DE GB IT LI**

(56) Entgegenhaltungen:
**EP - A - 0 044 598**
**DE - B - 2 063 183**
**FR - A - 2 485 842**
**US - A - 3 500 215**
**US - A - 3 918 001**

(73) Patentinhaber: **Siemens Aktiengesellschaft Berlin und München, Wittelsbacherplatz 2, D-8000 München 2 (DE)**

(72) Erfinder: **Müller, Eugen, Dr.-Ing., Birgweg 8, D-8012 Hohenschäftlarn (DE)**
Erfinder: **Stummer, Baldur, Dipl.-Ing., Wilhelm-Kuhnert-Strasse 21, D-8000 München 90 (DE)**

**Beschreibung**

Die Erfindung betrifft eine Schaltungsanordnung zur Basisbandübertragung mit Echokompensation gemäss dem Oberbegriff des Patentanspruches 1.

Schaltungen der vorgenannten Art sind dem Grundkonzept nach aus der DE-AS-2 063 183 und der FR-OS 2 485 842 bekannt. Es ist dort nicht erkennbar, ob eine Vorcodierung angewendet wird.

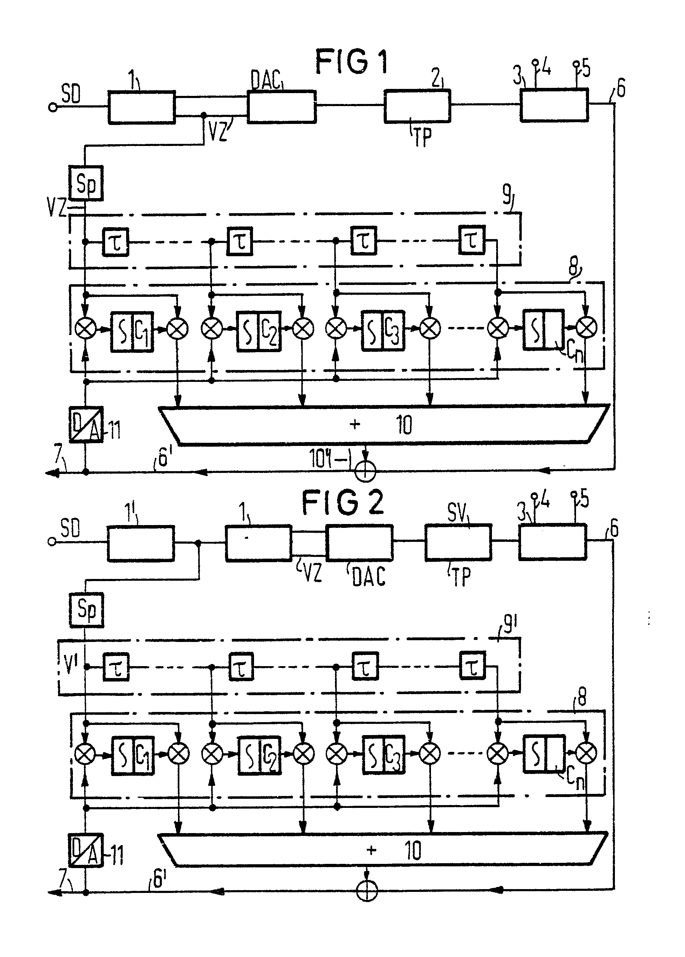

Auch ist eine Schaltungsanordnung zur Datenübertragung mit Echokompensation unter Verwendung eines adaptiven Transversalfilters mit einer Laufzeitkette aus der EP-A-44 598 (Fig. 2) bekannt. Die Laufzeitkette wird zumindest teilweise doppelt, nämlich zur Erzeugung zweier verschiedener Kompensationssignale, ausgenützt (vgl. Fig. 8).

Aus der US-PS 3 500 215 (Fig. 1) ist eine Schaltung zur Impulsformung bekannt, die ebenfalls mit einer Laufzeitkette arbeitet, wobei die Impulsformung durch Bewertung der verzögerten Signale mit Gewichtsfaktoren erreicht wird. Hinweise auf die Verwendung einer Vorcodierung finden sich auch dort nicht.

Aus der US-PS 3 918 001 ist eine Schaltung bekannt, bei der zwei Signale erzeugt werden, die die Bedingungen der Hilbert-Transformation erfüllen.

Bei Basisband-Duplexübertragung über ein Leiterpaar werden Echos, die an inhomogenen Kabeln entstehen, durch Echokompensatoren beseitigt. Damit das verbleibende Restecho hinreichend klein gehalten werden kann, muss das Kompensationssignal in ausreichend feinen Stufen einstellbar sein. Darüber hinaus muss durch strenge Forderungen bezüglich Linearität und Symmetrie an das Sendesignal garantiert sein, dass Reste des eigenen Sendesignals, die durch den Kompensator nicht beseitigt werden können, nicht zur Begrenzung der Kompensationsgüte führen.

Anhand der Fig. 1 werden nachstehend die beim Stand der Technik vorwiegend auftretenden Schwierigkeiten noch im einzelnen erläutert.

Fig. 1 zeigt das Übersichtsbild eines Echokompensators, bei dem die binären Daten im Coder in ein gleichstromfreies, z.B. dreiwertiges Digitalsignal umgewandelt und anschliessend impulsgeformt der Senderendstufe zugeführt werden.

Das Vorzeichen (VZ) des Leitungssignals (Dauer von VZ ist $\tau$) wird in einer digitalen Laufzeitkette verzögert, wobei die Verzögerungszeit den Abstand der Koeffizienten $C_v$ bestimmt. Da als Werte von VZ = 1, 0, +1 auftreten können, sind 2 Bits zur Darstellung erforderlich.

Das verzögerte VZ des eigenen Sendesignals bewirkt mit dem A/D-gewandelten Restsignal die Einstellung der Koeffizienten $C_v$, bis das Restsignal minimal ist.

Dabei wird exakte Symmetrie des Sendesignals, d.h. gleicher Zeitverlauf für das Leitungssignal bei VZ = ±1, vorausgesetzt. Die Koeffizienten $C_v$ werden sich so einstellen, dass sie die Abtastwerte der Echozeitfunktion auf einen Impuls einschliesslich der Impulsformung wiedergeben. Eine Unterscheidung von positiven oder negativen Impulsen ist nicht möglich, so dass das Sendesignal mit grosser Präzision erzeugt werden muss, um «identisches» Verhalten für beide Polaritäten zu erreichen.

Dadurch wachsen die Herstellkosten stark an, da z.B. für einen Abstand des Restechos zum Sendesignal von 55 dB die Sendesignalerzeugung mit der Präzision eines 11 Bit-D/A-Wandlers erfolgen müsste, damit durch Fehler der Symmetrie nicht die Kompensationsgüte beeinträchtigt wird.

Aufgabe der Erfindung ist es, den vorstehenden erwähnten Schwierigkeiten nach Möglichkeit abzuhelfen und es lässt sich erreichen, dass durch die angegebenen Schaltungen die Symmetrieforderungen an das Sendesignal soweit abgeschwächt werden, dass auch grosse Werte der Kompensationsgüte ohne besonderen Aufwand erreichbar sind und die Erzeugung und Impulsformung des Sendesignals besonders einfach wird.

Diese Aufgabe wird gemäss der Erfindung nach den kennzeichnenden Merkmalen des Patentanspruches 1 gelöst.

In den Unteransprüchen sind vorteilhafte Ausgestaltungen angegeben.

Anhand von Ausführungsbeispielen wird nachstehend die Erfindung noch näher erläutert.

Es zeigen in der Zeichnung

Fig. 1 die bereits zum Teil erläuterte Kompensationsschaltung mit strengen Anforderungen an die Linearität und die Symmetrie bei der Sendesignalerzeugung; die Koeffizienten im Register stellen sich bei dieser bekannten Schaltung also auf die Impulsantwort des Echoweges auf einen binären Einzelimpuls einschliesslich der zugehörigen Impulsformung ein,

Fig. 2 eine Kompensationsschaltungen mit reduzierten Anforderungen an die Symmetrie bei der Sendesignalerzeugung, bei der sich die Koeffizienten im Register auf die Impulsantwort des Echoweges einstellen und auf einen Impuls des binären Vorcodierers,

Fig. 3a und b zeigen Vorcodieranordnungen für AMI- für PR 4 Codierungen,

Fig. 4 zeigt eine gemeinsame Verwendung der Laufzeitkette für Sendesignalerzeugung und Koeffizientenkorrektur,

Fig. 5a zeigt eine analoge Bewertungsschaltung,

Fig. 5b die doppelt genutzte digitale Laufzeitkette und

Fig. 5c den Zeitverlauf des Leitungssignals in Abhängigkeit der normalen Zeit t/T.

Zusätzlich zu den einleitend bereits gegebenen Erläuterungen sei hinsichtlich Fig. 1 rein schaltungstechnisch auf folgendes hingewiesen. Aus einer Datenquelle kommen binäre digitale «Sendedaten» SD zu einem Coder 1, von dem aus das Signal ternär/digital weitergegeben wird, an eine Impulsformungsschaltung, (z.B. Digital-Analog-Converter) DAC, von der aus das Signal ternär/analog über einen Sendeverstärker 2, der zusätzlich einen Tiefpass TP enthält, weiter zur Gabelschaltung 3 geht. Die Gabelschaltung besitzt die Anschlüsse 4 bzw. 5, die zur Übertragungsleitung führen. Ein weiterer Anschluss 6 der Gabelschaltung 3 führt zum Empfänger 7. Im Ausführungsbeispiel ist ferner ein an sich bekanntes Transversalfilter mit Koeffizientennachstellung dargestellt, das gestrichelt eingerahmt und mit der Bezugsziffer 8 versehen ist. Die gewählte Blockdarstellung lässt die einzelnen Koeffizienten $C_1$ bis $C_n$ erkennen, zugehörige Integrierglieder sind mit einem Integrationszeichen und die zugehörigen Multiplizierer sind mit einem Malzeichen versehen. In an sich bekannter Weise ist aus der Kettenschaltung einzelner Laufzeitglieder mit der Laufzeit $\tau$ eine Laufzeitkette mit der Bezugsziffer 9 zusammengesetzt, die als digitale Laufzeitkette ausgebildet ist, so dass sie nur die Werte 0, +1 und −1 verarbeiten muss. Zwischen dem Coder 1 und der Impulsformungsschaltung DAC ist eine Leitung eingezeichnet, auf der nur die Information über das Vorzeichen VZ zu übertragen ist. Diese Vorzeicheninformation wird in einen Speicher Sp gegeben, die somit am Ausgang des Speichers Sp, an der digitalen Laufzeitkette 9 und auch im Transversalfilter 8 zur Verfügung steht. Fig. 1 lässt weiterhin erkennen, dass die vom Transversalfilter kommenden Ausgangssignale einem Akkumulator 10 zugeführt werden, in dem Teilechosignale aufsummiert werden. Der Akkumulator 10 liefert an seinem Ausgang ein Kompensationssignal, das über einen Subtrahierer auf die Ausgangsleitung 6′ gegeben wird. Auf der Ausgangsleitung 6 ist zunächst das Empfangssignal einschliesslich der Echos vorhanden. Subtrahiert man das aus dem Akkumulator 10 kommende Kompensationssignal 10′, ist auf dem Leitungsabschnitt 6′ nur noch ein Restsignal vorhanden, das aus «Empfangssignal + Fehler» besteht. Dieses Signal wird dann auf der Leitung 7 dem Empfänger zugeführt. Ein weiterer D/A-Wandler 11 ist ebenfalls in an sich bekannter Weise mit weiteren Eingängen des Transversalfilters 8 verbunden und trägt zur Einstellung und zur Regelung der Koeffizienten $C_1$ bis $C_n$ bei.

In den nachfolgenden Figuren sind funktionsgleiche Elemente mit den gleichen Bezugsziffern wie in Fig. 1 bezeichnet, so dass insoweit nicht mehr im einzelnen darauf eingegangen werden muss.

In der Schaltung von Fig. 2 stellen sich die Koeffizienten $C_1$ und $C_n$ im Register 8 auf die Impulsantwort des Echoweges auf einen Impuls eines zusätzlich vorgesehenen binären Vorcoders 1′ ein. Unterschiedlich zu Fig. 1 gelangen also im Ausführungsbeispiel von Fig. 2 die Sendedaten SD zunächst in den Vorcoder 1′. Die weitere Schaltung ist mit Ausnahme des Abgriffes für das Signal der Laufzeitkette gleichartig aufgebaut, auch ist wiederum der Speicher Sp vorhanden, der alle Signale auf die Impulsbreite $\tau$ bringt. Die digitale Laufzeitkette ist deshalb mit der Bezugsziffer 9′ bezeichnet, weil sie nur noch digitale Laufzeitwerte 0 und 1 verarbeiten muss.

Durch die in Fig. 2 dargestellte Änderung lässt sich also erreichen, dass das binäre Ausgangssignal des Vorcoders 1′ zur Koeffizientennachstellung verwendet wird.

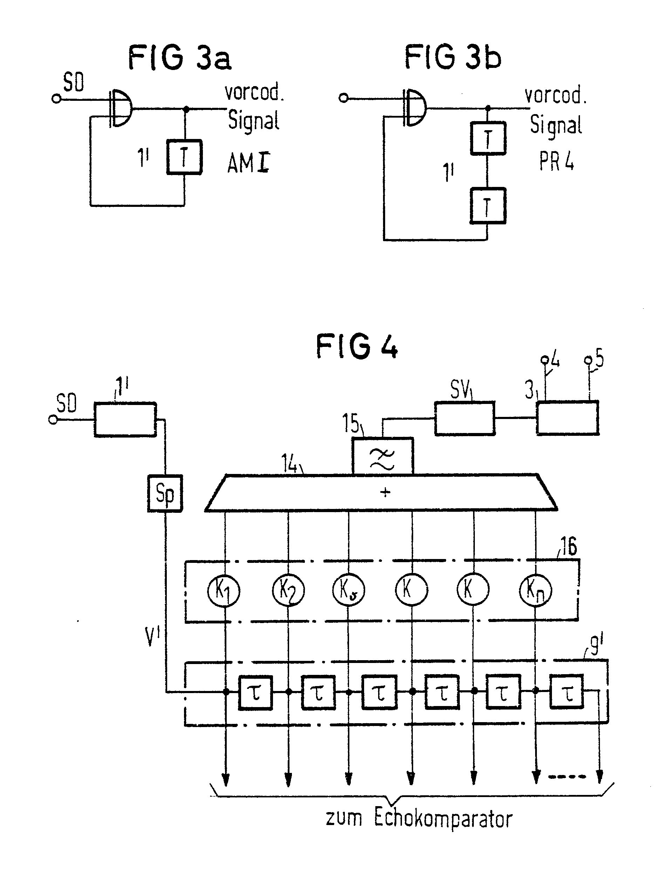

Mögliche schaltungstechnische Ausgestaltungen für den Vorcoder 1′ sind in Fig. 3a und b gezeigt.

Der Vorcoder 1′ ist in Fig. 3a für Codierungen mit AMI (alternate mark inversion) und in Fig. 3b für PR4 (partial response Kl. 4) dargestellt.

Bei jeder binären 1 im vorcodierten Signal wird im Coder ein Doppelimpuls (einem positiven Einzelimpuls folgt mit einer Verzögerung um T bei AMI oder um 2T bei PR4 ein negativer Einzelimpuls; T entspricht der Dauer eines bit) erzeugt, so dass sich im Koeffizientenregister die Impulsantwort des Echoweges auf einen Doppelimpuls einstellt.

Eine eventuell vorhandene Verschiedenheit der Impulse unterschiedlicher Polarität wird somit berücksichtigt und führt nicht zu verbleibenden Kompensationsfehlern.

Im Ausführungsbeispiel von Fig. 4 ist nun zu erkennen, wie die Sendedaten SD in den Vorcoder 1′ einlaufen und diesen als digitales Binärsignal verlassen. Nachgeschaltet ist wiederum der Speicher Sp, von dem aus das verzögerte Signal V′ ausgeht. Die digitale Laufzeitkette, die die Werte 0 und 1 zu verarbeiten hat, ist mit der Bezugsziffer 9′ bezeichnet und ihre Ausgänge führen zum Echokompensator. Eine analoge Bewertung findet in dem mit 16 bezeichneten, gestrichelt eingerahmten Schaltungsabschnitt statt, in dem die Gewichtsfaktoren $K_1$, $K_2$ bis $K_n$ zu erkennen sind. Die Teilsignale werden in einem anschliessenden Summierer 14 aufsummiert, dem sich eine Tiefpassschaltung 15, der Sendeverstärker SV und schliesslich die Gabelschaltung 3 anschliessen.

Im Ausführungsbeispiel von Fig. 4 wird also die zur Koeffizientenkorrektur erforderliche Laufzeitkette 9′ zumindest teilweise zur Erzeugung und Impulsformung des Sendesignals mit verwendet und es wird die Bewertung des verzögerten Signals V mit Gewichtsfaktor $K\gamma$ zur Pulsformung U(t) des Sendesignales verwendet. Somit wird also die Laufzeitkette 9′, die ja auch für den Aufbau des Echokompensators erforderlich ist, gewissermassen zweifach ausgenutzt.

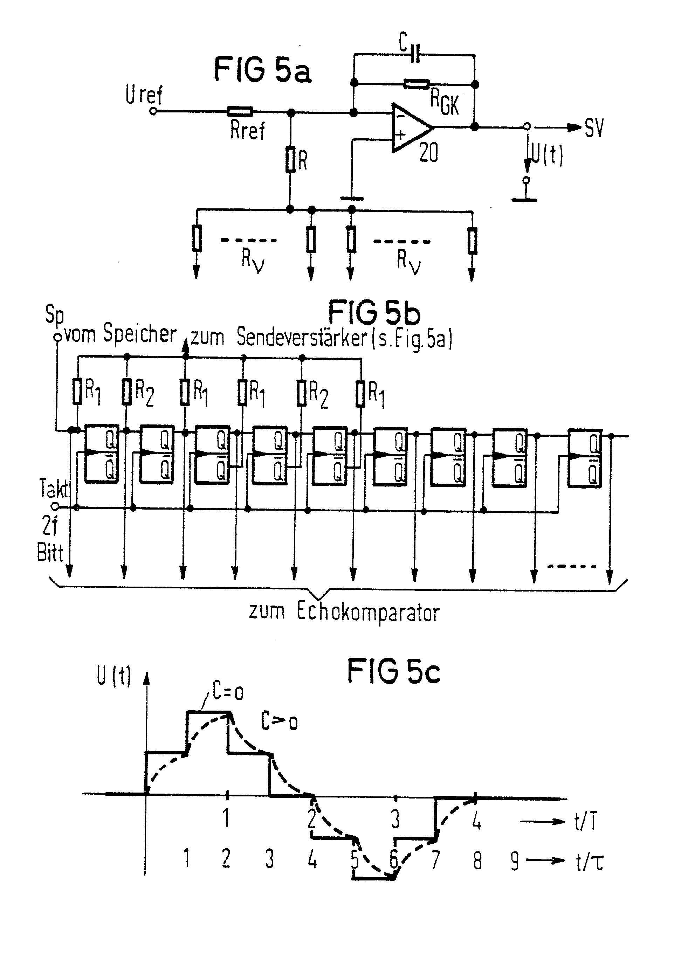

Mögliche Ausgestaltungen für die Blockbausteine 14, 15 und 16 in Fig. 4 sind in Fig. 5a und b als Gesamtschaltung dargestellt, in der eine analoge Bewertung, eine Summation und eine Filterung stattfinden kann. Die Fig. 5c zeigt dabei den Zeitverlauf t/T für die Spannung U(t), wobei der treppenförmige Zeitverlauf für einen Kondensator mit dem Wert C = 0 und der gestrichelte Zeitverlauf für einen positiven Wert von C > 0 gilt.

Fig. 5a zeigt die Bewertungsschaltung mit den Widerständen $R\gamma$, die die Gewichtsfaktoren $K\gamma$ realisieren, sowie einen Summationswiderstand R und einen Widerstand $R_{ref}$, über den ein Gleichspannungsmittelwert zugesetzt werden kann. Die invertierende Verstärkerschaltung 20 ist über den Widerstand $R_{6K}$ und die Kapazität C gegengekoppelt, durch die eine Tiefpassfilterwirkung erreicht werden kann.

Fig. 5b zeigt beispielhaft die Erzeugung eines Treppensignals, in dem für positive Stützwerte von U(t) am Ausgang Q und für negative Stützwerte von U(t) am invertierten Ausgang Q̄ der Schieberegister der digitalen Laufzeitkette abgegriffen wird. Die Verschiebung des vom Speicher Sp kommenden Signals wird mit dem Takt der Frequenz $2 f_{Bit}$ vorgenommen, wenn für die Stufenbreite von U(t) und den zeitlichen Abstand des Koeffizienten $T_{Bit/2}$ gewählt ist.

Die die Gewichtsfaktoren darstellenden Widerstände $R\gamma$ können auch durch sogenannte SC-Schaltungen, unter denen bekanntlich sogenannte Switch-Capacitor-Schaltungen zu verstehen sind, ersetzt werden. Diese Massnahme lässt sich selbstverständlich auch in der gegengekoppelten Verstärkerschaltung verwenden, so dass alle Widerstände der Schaltungen nach Fig. 5a und b durch sogenannte Switch-Capacitor-Schaltungen realisiert werden.

Es kann also die digitale Laufzeitkette (Werte des vorcodierten Signals 0, 1 d. h. 1 bit zur Darstellung) zur Sendesignalerzeugung mitverwendet werden, um so die Blöcke «Coder und Impulsformung» durch eine Schaltung «analoge Bewertung, Summation und Filterung» in Fig. 4 zu ersetzen. Die Bewertung kann z.B. durch Widerstände (s. Fig. 5) oder durch periodisch geschaltete Kapazitäten (Switched-Capacitor-Schaltungen) erfolgen.

Von den Widerständen in Fig. 5b sollen z.B. für einen approximierten $cos^2$-förmigen Verlauf des Leitungssignals je vier ($R_1$) bzw. zwei ($R_2$) jeweils annähernd den gleichen Wert besitzen. Abweichungen aller Widerstände von den Nominalwerten um bis zu 3 . . . 5% beeinflussen nur geringfügig die Augenöffnung im Empfangsweg, nicht aber die Qualität der Kompensation.

Im Falle einer A/D-Wandlung des Restsignals mit nur einem Bit Auflösung können alle Multiplizierer z.B. als UND-Verknüpfungen realisiert werden.

## Patentansprüche

1. Schaltungsanordnung zur Basisbandübertragung mit Echokompensation unter Verwendung eines adaptiven Transversalfilters mit einer Laufzeitkette (9') und eines Vorcodierers (1'), dadurch gekennzeichnet, dass die zur Koeffizientenkorrektur erforderliche Laufzeitkette (9') zumindest teilweise zur Erzeugung und Impulsformung des Sendesignals mitverwendet ist, dass die Bewertung des verzögerten Signals (V) mit Gewichtsfaktoren ($K\gamma$) die Pulsformung (U(t)) des Sendesignals liefert, dass die Gewichtsfaktoren ($K\gamma$) durch Widerstände ($R\gamma$, Fig. 5) dargestellt sind, und dass das Sendesignal (U(t)) durch eine gegengekoppelte invertierende Verstärkerschaltung (z.B. Operationsverstärker) erzeugt wird.

2. Schaltungsanordnung nach Anspruch 1, dadurch gekennzeichnet, dass die Gewichtsfaktoren darstellenden Widerstände ($R\gamma$) durch SC-Schaltungen (Switched-Capacitor-Schaltungen) realisiert sind.

3. Schaltungsanordnung nach Anspruch 1 oder 2, dadurch gekennzeichnet, dass die in der gegengekoppelten Verstärkerschaltung enthaltenen Widerstände durch SC-Schaltungen (Switched-Capacitor-Schaltungen) realisiert sind.

## Claims

1. A circuit arrangement for base band transmission with echo compensation using an adaptive transversal filter with a delay chain (9') and a preliminary coder (1'), characterised in that the delay chain (9') required for the coefficient correction is additionally used, at least in part, for the generation and pulse shaping of the transmitted signal, that the evaluation of the delayed signal (V) with weighting factors ($K\gamma$) supplies the pulse shaping (U(t)) of the transmitted signal, that the weighting factors ($K\gamma$) are represented by resistors ($R\gamma$) (Fig. 5) and that the transmitted signal (U(t)) is produced by a negative feedback inverting amplifier circuit (operational amplifier).

2. A circuit arrangement as claimed in claim 1, characterised in that the resistors ($R\gamma$) which represent the weighting factors are formed by SC-circuits (switched capacitor circuits).

3. A circuit arrangement as claimed in claim 1 or claim 2, characterised in that the resistors included in the negative feedback amplifier circuit are formed by SC-circuits (switched capacitor circuits).

## Revendications

1. Montage pour réaliser une transmission dans la bande de base avec une suppression des échos, moyennant l'utilisation d'un filtre transversal adaptatif comportant une chaîne à temps de transit (9') et un dispositif de codage préalable (1'), caractérisé par le fait que la chaîne à temps de transit (9') nécessaire pour réaliser la correction de coefficients est utilisée simultanément, au moins partiellement, pour produire et mettre sous forme d'impulsions le signal d'émission, que la pondération du signal retardé (V) par des facteurs de pondération ($K\gamma$) fournit la mise sous la forme d'impulsions (U(t)) du signal d'émission, que les facteurs de pondération ($K\gamma$) sont représentés par des résistances ($R\gamma$, figure 5), et que le signal d'émission (U(t)) est produit par un circuit amplificateur inverseur à contre-réaction (par exemple un amplificateur opérationnel).

2. Montage suivant la revendication 1, caractérisé par le fait que les résistances ($R\gamma$) représentant les facteurs de pondération sont formées au moyen de circuits SC (circuits Switched-Capacitor).

3. Montage suivant la revendication 1 ou 2, caractérisé par le fait que les résistances contenues dans le circuit amplificateur à contre-réaction sont formées par des circuits SC (circuits Switched-Capacitor).

# FIG 1

# FIG 2

# FIG 3a

SD o—

vorcod.
Signal

1' T

AM I

# FIG 3b

o—

vorcod.
Signal

1'

T

T

PR 4

# FIG 4

SD o— 1'

Sp

V'

15

14

+

16

$K_1$  $K_2$  $K_3$  K  K  $K_n$

9'

τ  τ  τ  τ  τ  τ

SV

≈

3

4  5

zum Echokomparator

# FIG 5a

Uref

Rref

R

C

$R_{GK}$

20

SV

U(t)

$R_V$

$R_V$

# FIG 5b

Sp

vom Speicher zum Sendeverstärker (s. Fig. 5a)

$R_1$ $R_2$ $R_1$ $R_1$ $R_2$ $R_1$

Takt

2f
Bitt

zum Echokomparator

# FIG 5c

U(t)

C=o

C>o

1   2   3   4   t/T

1   2   3   4   5   6   7   8   9   t/$\tau$